# EUROPEAN PATENT SPECIFICATION

(11) **EP 4 018 578 B1**
(45) Date of publication and mention of the grant of the patent: **18.11.2026**
(21) Application number: 19839654.1
(22) Date of filing: 05.10.2019
(51) Int. Cl.: H04J 13/22, H04L 5/00, H04L 27/26

(54) **A METHOD OF INTERLACED PUCCH DESIGN - FORMAT 0**
VERFAHREN EINES VERSCHACHTELTEN PUCCH-DESIGNS - FORMAT 0
PROCÉDÉ DE CONCEPTION DE PUCCH ENTRELACÉ-FORMAT 0

(43) Date of publication of application: 29.06.2022
(73) Proprietor: GUANGDONG OPPO MOBILE TELECOMMUNICATIONS CORP., LTD., Wusha Village, Chang'an Town Dongguan City, Guangdong (CN)
(72) Inventor: LIN, Hao, 92200 Neuilly sur Seine (FR)
(74) Representative: Santarelli
(86) International application number: PCT/IB2019/001275
(87) International publication number: WO 2021/064440

(56) References cited:
- QUALCOMM INCORPORATED: "UL signals and channels for NR-U", vol. RAN WG1, no. Prague, CZ; 20190826 - 20190830, 17 August 2019 (2019-08-17), XP051765849, Retrieved from the Internet <URL:http://www.3gpp.org/ftp/tsg_ran/WG1_RL1/TSGR1_98/Docs/R1-1909244.zip> [retrieved on 20190817]
- VIVO: "Discussion on physical UL channel design in unlicensed spectrum", vol. RAN WG1, no. Chongqing, China; 20191014 - 20191020, 4 October 2019 (2019-10-04), XP051808106, Retrieved from the Internet <URL:https://ftp.3gpp.org/tsg_ran/WG1_RL1/TSGR1_98b/Docs/R1-1910203.zip R1-1910203 Discussion on physical UL channel design in unlicensed spectrum.docx> [retrieved on 20191004]

## Description

### TECHNICAL FIELD

The present disclosure relates to the field of communication technologies in unlicensed spectrum, and in particular, to a method for a user equipment to transmit a physical uplink control channel in a wireless communication system supporting an unlicensed band and apparatuses supporting the same.

The communication technology is for example a 5G (fifth generation) network using the 5G NR (New Radio) as radio access technology (RAT) defined by 3GPP. The present disclosure is applicable to 5G NR-U (NR in unlicensed spectrum).

### BACKGROUND

According to the NR specification Release 15 (NR R15, 3GPP TS 38.213), the UE reports uplink control information (UCI) in a physical uplink control channel (PUCCH).

### PUCCH format 0

In NR Rel. 15, the PUCCH format 0 is generated from a specified computer generated sequence (CGS) of length 12, i.e., S(n),n=0,...,11, which possesses very low Peak-to-Average Power Ratio (PAPR) property. This channel can carrier 1 or 2-bits ACK/NACK (A/N) information together with Scheduling Request (SR) indication. The A/N information is presented by the cyclic shift (CS), additionally introduced on top of the CGS. There are 12 possible CS, i.e. *m_{cs}* = 0, ...,11. The cyclic shifted sequence is given by ${S}_{cs} \left(n\right) = {e}^{\frac{jπ}{6} αn} ⋅ S \left(n\right) , n = 0 , … , 11 ,$ where α is a phase rotation depending on the selected CS *m_{cs}.* The A/N information is tightly bounded with the *m_{cs}* value, which is specified in NR Rel. 15, TS 38.213 section 9.2.3 and section 9.2.5.1. The PUCCH format 0 occupies 1 Physical Resource Block (PRB) in frequency (12 subcarriers) and 1 or 2 orthogonal frequency-division multiplexing (OFDM) symbols in time domain.

### NR-U PUCCH interlace

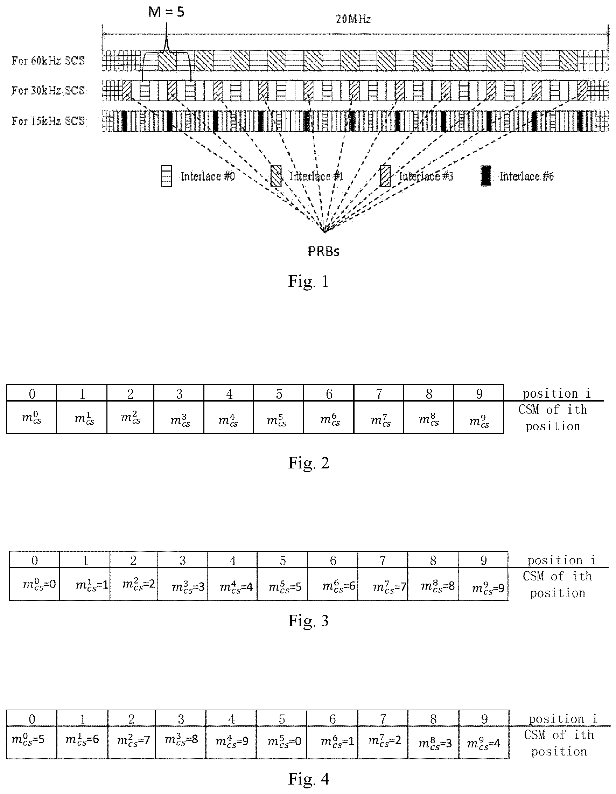

In the unlicensed band in 5G Hz, the regulation imposes that if a transmitter wants to operate transmission in the channel, the transmission has to occupy at least 80% of the channel bandwidth. With this restriction in mind, NR-U decided to adopt an interlaced structure for two uplink channel transmissions, they are PUCCH and PUSCH. Each interlace structure will have specific number of PRB. Between each consecutive PRB pairs, there is M PRB further apart. For example, in a 20Mhz bandwidth and for 30Khz subcarrier spacing case, 1 interlace has 10 or 11 PRBs and M = 5 as shown in Figure 1.

The NR Rel.15 PUCCH format 0 occupies only 1 PRB in frequency domain, while in NR-U the interlaced structure has to be implemented. A simple repetition of NR Rel. 15 PUCCH format 0 in each of the PRBs of an interlace will cause very high PAPR issue. Thus, an enhancement should be done for this new design of PUCCH format 0 in NR-U systems.

QUALCOMM INCORPORATED: "UL signals and channels for NRU" discloses supporting an enhanced PUCCH format 0 to reduce the specification changes compared to NR, especially in the case of HARQ-ACK prior to dedicated PUCCH resource configuration.

VIVO: "Discussion on physical UL channel design in unlicensed spectrum" discloses the details for the cycling of cyclic shift scheme for enhanced PFO/1 in NRU.

### SUMMARY

The invention is set out in the appended set of claims. A first object of the present disclosure is a method of transmitting a physical uplink control channel (PUCCH) in unlicensed spectrum, which is transmitted by a user equipment.

Such method allows to generate and transmit a PUCCH format 0 in the interlaced structure that is able to carrier 1-bit, 2-bit A/N. Moreover this method allows to maintain a low PAPR property. The PAPR reduction is due to the cyclic shift group under the condition that the cyclic shift members are mutually different. The relationship between the different cyclic shift members ensures this condition. The first and second indications may be assigned to different user equipments (UE) in order to enable UE multiplexing in the same resource, i.e. different UEs will be assigned to different first cyclic shift member, and/or different first cyclic shift member position. The one-to-one mapping definition is done so that for the same UE with the same first and second indications, different A/N statuses will relate to different CSG and for different UEs with different indications, each A/N status will relate to different CSG.

Advantageously, the PUCCH using format 0 generation comprises the acknowledgement information (A/N) together with a Scheduling Request (SR) indication and the one-to-one mapping relationship definition is done between the CSG and the A/N information together with the SR indication.

Such method allows to design a PUCCH format 0 including the SR indication which can be used to obtain mutually different CSM. Further, the one-to-one mapping definition will be extended to SR so that for the same UE with the same indications, different A/N+SR statuses will relate to different CSG and for different UEs with different indications, each A/N+SR status will relate to different CSG.

A second object of the present disclosure is a user equipment transmitting a physical uplink control channel to a base station in a wireless communication system in unlicensed spectrum.

A third object of the present disclosure is a computer readable medium comprising program instructions for causing a user equipment to perform the steps of the transmitting method according to the first aspect.

### BRIEF DESCRIPTION OF DRAWINGS

The appended drawings required in description of embodiments or the prior art will be briefly described below.
Fig. 1 shows an example of an interlaced structure for PUCCH;
Fig. 2 shows an example of a cyclic shift group (CSG) within 1 interlace;
Fig. 3 shows another example of a cyclic shift group (CSG) within 1 interlace;
Fig. 4 shows another example of a cyclic shift group (CSG) within 1 interlace;
Fig. 5A-5B shows an example of 1-bit and 2-bit ACK/NACK reporting using a determined cyclic shift group (CSG);
Fig. 6A-6B shows an example of ACK and NACK reporting using a determined CSG;
Fig. 7A-7B shows an example of 1-bit and 2-bit ACK/NACK with Scheduling Request (SR) reporting using a determined CSG;
Fig. 8 shows another example of 1-bit ACK/NACK reporting using a determined CSG with several references.

### DESCRIPTION OF EMBODIMENTS

In the following disclosure, we will first present a cycle shift group and cycle shift member, followed by examples for implementing to method of generating and transmitting a PUCCH format 0.

### Cycle shift group and cycle shift members

The cyclic shift group (CSG) can be expressed as ${m}_{cs}^{i}$ with $i = 0 , … , {N}_{RB}^{interlace} - 1$ , where ${N}_{RB}^{interlace}$ stands for the total number of PRB within 1 interlace; ${m}_{cs}^{i}$ is a cyclic shift member and its corresponding position is i-th position within the cyclic shift group. Thus a cyclic shift group contains ${N}_{RB}^{interlace}$ cyclic shift members and accordingly it contains ${N}_{RB}^{interlace}$ positions. In the example of figure 2, we assume ${N}_{RB}^{interlace} = 10$. Therefore, the position *i* goes from 0 up to 9.

If one cyclic shift member as well as its position are determined (i.e. ${m}_{cs}^{i}$), the cyclic shift member on the rest of the positions (i.e. ${m}_{cs}^{j}$) can be derived from some pre-defined relationship, such as: ${m}_{cs}^{j} = \left({m}_{cs}^{i}+\left(\left(j-i\right)mod {N}_{RB}^{interlace}\right)T\right) mod 12 .$

In this example, all cyclic shift members on j-th position, ${m}_{cs}^{j}$, can be derived from ${m}_{cs}^{i}$ and the relative position between *j* and *i,* and optionally with a parameter *T.* Here ${m}_{cs}^{i}$ is the value of the so-called first cycle shift member (CSMf), to be indicated by a first indication, i is the position of CSMf, to be indicated by a second indication, and T is an optional first parameter to be indicated by a third indication.

### Cycle shift member candidates

In the present disclosure, we assume that the cyclic shift member (CSM) can take the value from a set of candidate values, called cyclic shift member candidates. The candidate values are integer values from 0 up to 11, i.e. {0,1,2,3,4,5,6,7,8,9,10,11}. The reason of this choice is that after the cyclic shift group is decided, the PUCCH format 0 is formed as ${S}_{cs}^{i} \left(n\right) = {e}^{\frac{jπ}{6} α \left(i\right) n} ⋅ S \left(n\right) , n = 0 , … , 11 ; i = 0 , … , {N}_{RB}^{interlace} - 1 ,$ where *α*(*i*) is i-th phase rotation that is a function of the i-th cyclic shift member ${m}_{cs}^{i}$. In the following we simply write it as ${S}_{cs}^{i} \left(n\right) = {e}^{\frac{jπ}{6} {m}_{cs}^{i} n} ⋅ S \left(n\right)$. Note that S(n) is a base sequence for PUCCH format 0.

### Examples of determination of the cycle shift group

For example, if we assume that ${N}_{RB}^{interlace} = 10$, and T=1, when one cyclic shift member (CSM) value and its corresponding position is given, for example ${m}_{cs}^{0} = 0$, then we can derive ${m}_{cs}^{j} = \left(0+j mod 10\right) mod 12 = \left\{1, 2, 3, 4, 5, 6, 7, 8, 9\right\}$ for *j*={1,2,3,4,5,6,7,8,9}, respectively. Thus, the cyclic shift group CSG is ${m}_{cs}^{i} = i$, for *i*={0,1,2,3,4,5,6,7,8,9} as shown in Figure 3.

In this example, the first cyclic shift member CSMf (a.k.a. *m_{cs}*), for which the cyclic shift member value is indicated by the first indication and its position is indicated by the second indication, i.e. ${m}_{cs}^{0} = 0$. The rest of the cyclic shift members (CSMn) in the group can be derived from a pre-defined relationship, which is ${m}_{cs}^{j} = \left({m}_{cs}^{0}+\left(\left(j-0\right)mod 10\right)T\right) mod 12$. Then the third indication will give the value of the parameter T, i.e. T=1 in our example.

Another example, if we set one cyclic shift member and its corresponding position to ${m}_{cs}^{5} = 0$, then we can derive ${m}_{cs}^{j} = \left(0+\left(j-5\right)mod 10\right) mod 12 = \left\{5, 6, 7, 8, 9, 1, 2, 3, 4\right\}$ for *j*={0,1,2,3,4,6,7,8,9}, respectively. Thus, the cyclic shift group is {5,6,7,8,9,0,1,2,3,4} as hown in Figure 4.

In this example, the first cyclic shift member CSMf (a.k.a. *m_{cs}*)*,* for which the cyclic shift member value is indicated by the first indication and its position is indicated by the second indication, i.e. ${m}_{cs}^{5} = 0$. The rest of the cyclic shift members in the group can be derived from a pre-defined relationship, which is ${m}_{cs}^{j} = \left({m}_{cs}^{5}+\left(\left(j-5\right)mod 10\right)T\right) mod 12$ . Then the third indication will give the value of the parameter T, i.e. T=1 in our example.

### Examples of ACK/NACK only with 1 or 2 bits

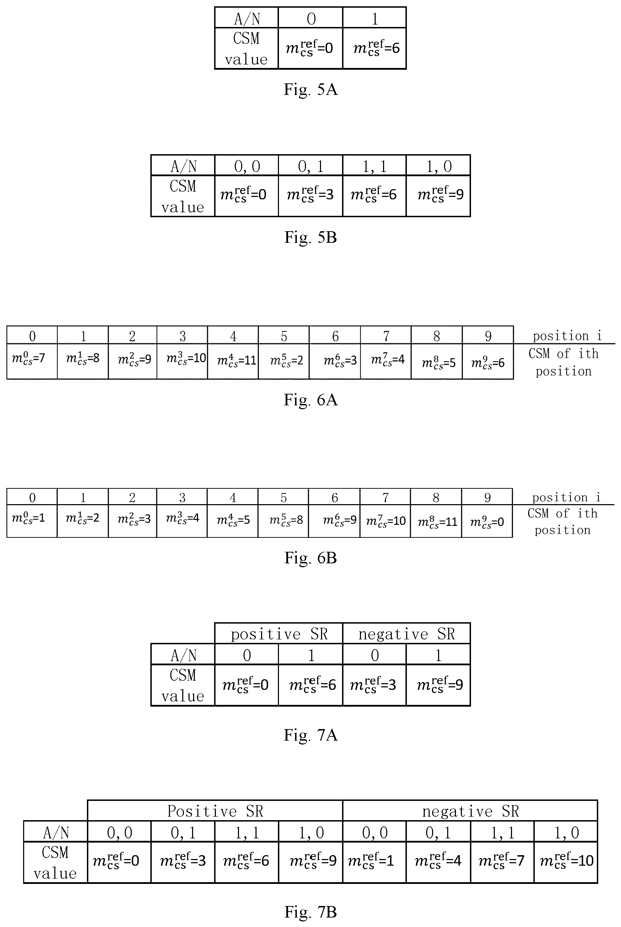

The user equipment (UE) reports ACK/NACK (A/N) using the determined cyclic shift group (CSG). In this example, we assume that there is a reference value for the first cyclic shift member CSMf, which can be pre-specified, such as for the case of 1-bit A/N, ${m}_{cs}^{ref} = 0$ for ACK ( ${m}_{cs}^{ref} \left(Ack\right) = 0$) and ${m}_{cs}^{ref} = 6 \left({m}_{cs}^{ref}\left(Nack\right)=6\right)$ for NACK as shown in Figure 5A. Thus in this example, when a UE has to report 1-bit A/N, if the A/N=ACK, the reference cyclic shift member value is 0, and if the A/N=NACK, the reference cyclic shift member value is 6.

For the case of 2-bits A/N, four reference values are pre-defined :
ACK: ${m}_{cs}^{ref} = 0$ for [0, 0] and ${m}_{cs}^{ref} = 3$ for [0, 1],
NACK: ${m}_{cs}^{ref} = 6$ for [1, 1] and ${m}_{cs}^{ref} = 9$ for [1, 0],
as shown in Figure 5B.

Thus in this example, when a UE has to report 2-bit A/N, if
- the A/N= [0, 0] ACK, the reference cyclic shift member value is 0,
- the A/N= [0, 1] ACK, the reference cyclic shift member value is 3,
- the A/N= [1, 1] NACK, the reference cyclic shift member value is 6, and
- the A/N= [1, 0] NACK, the reference cyclic shift member value is 9.

Alternatively, it can be defined that each even slot is for ACK and each odd slot is for NACK.

Coming back to the 1-bit A/N example shown in Figure 5A, the network, e.g. a base station, can send the first and second indications to inform the UE about the first cyclic shift member and its corresponding position. For example, the first indication can be an offset w.r.t. ${m}_{cs}^{ref}$, e.g. offset₁ = 2; and the second indication can point directly to the position index, such as 5. In this manner, the UE knows that the first cyclic shift member is ${m}_{cs}^{5} = {m}_{cs}^{ref} \left(Ack\right) + {offset}_{1} = 2$ for ACK; and ${m}_{cs}^{5} = {m}_{cs}^{ref} \left(Nack\right) + {offset}_{1} = 8$ for NACK.

As long as the first cyclic shift member is determined, all the subsequent members can be derived from it when the derivation relationship is determined, which can be optionally depending on the third indication. Assume that the third indication points the parameter T=1, then we have the following derivation relationship: ${m}_{cs}^{j} = \left({m}_{cs}^{5}+\left(\left(j-5\right)mod 10\right)\right) mod 12 .$

As a result the cycle shift group determined for ACK is given in Figure 6A and the cycle shift group determined for NACK is given in Figure 6B.

It is worth noting that the second and the third indications can also indicate an offset w.r.t. a pre-defined reference. For instance, for the second indication, the network can define a reference position, e.g., *p*^{ref}=0, then the indication gives an offset₂. Thus, the UE will understand that the indicated position is *p= p*^{ref} + offset₂, where offset₂={0,1,2,3,4,5,6,7,8,9}.

Similarly, the third indication can also give an offsets within a set of candidate values w.r.t. a pre-defined value, e.g. T = A (t^{ref}+offset₃). Assuming the candidate values are {1,3,5,7,11} and t^{ref}=0. Then the third indication can indicate: offsets = {0,1,2,3,4}. Either ways, i.e. direct indication or indirect indication via reference and offsets, will lead to the same cyclic shift group for A/N reporting.

### Examples of ACK/NACK together with Scheduling Request (SR)

In a more complex example, the UE has to report A/N together with positive SR or negative SR. Similar to the example with A/N only, the reference cyclic shift member value can be used to reflect different combinations of A/N+SR. An example for 1-bit A/N + SR case is shown in Figure 7A and another example for 2-bit A/N + SR is shown in Figure 7B.

Thus in Figure 7A, for the case of 1-bit A/N+SR, four reference values are pre-defined :
ACK and positive SR: ${m}_{cs}^{ref} = 0$,
ACK and negative SR: ${m}_{cs}^{ref} = 3$,
NACK and positive SR: ${m}_{cs}^{ref} = 6$,
NACK and negative SR: ${m}_{cs}^{ref} = 9$.

In Figure 7B, for the case of 1-bit A/N+SR, eight reference values are pre-defined:
ACK and positive SR: ${m}_{cs}^{ref} = 0$ for [0, 0] and ${m}_{cs}^{ref} = 3$ for [0, 1],
ACK and negative SR: ${m}_{cs}^{ref} = 1$ for [0, 0] and ${m}_{cs}^{ref} = 4$ for [0, 1],
NACK and positive SR: ${m}_{cs}^{ref} = 6$ for [1, 1] and ${m}_{cs}^{ref} = 9$ for [1, 0],
NACK and negative SR: ${m}_{cs}^{ref} = 7$ for [1, 1] and ${m}_{cs}^{ref} = 10$ for [1, 0].

Then the rest of the process is similar to the ACK/NACK only with 1 or 2 bits.

### Example of reference to A/N mapping and UE multiplexing

In the above examples, the reference cyclic shift member, ${m}_{cs}^{ref}$, represents the A/N or A/N+SR results, while the first, second and third indications are assigned to different UEs in order to enable UE multiplexing in the same resource, i.e. different UEs will be assigned to different first cyclic shift member, and/or different first cyclic shift member position, and/or different T.

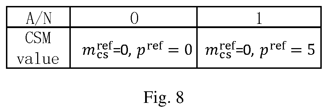

It is worth noting that other options are possible, such that selecting ${m}_{cs}^{ref} + {p}^{ref}$ to represent A/N or A/N+SR. An example for 1-bit A/N is shown in Figure 8. It is to say that we have three different references, i.e. ${m}_{cs}^{ref}$, *p*^{ref}, *t*^{ref}, so normally any reference or any combination of multiple references can be used to represent A/N or A/N+SR.

List of abbreviations in the description and drawings:

| Acronyms | Full name |
|---|---|
| LTE | Long Term Evolution |
| LTE-A | Advanced long term evolution |
| NR | New Radio |
| NR-U | New Radio-unlicensed |
| BS | Base-station |
| UE | User Equipment |
| PUCCH | Physical Uplink Control CHannel |
| PUSCH | Physical Uplink Shared CHannel |
| UCI | Uplink control information |
| LBT | Listen Before Talk |
| SR | Scheduling Request |
| CSM | Cyclic Shift Member |
| CSMf | first Cyclic Shift Member |
| CSMn | subsequent Cyclic Shift Member |
| CSG | Cyclic Shift Group |
| A/N | ACK/NACK (Acknowledgement / Non-Acknowledgement) |

In the above description, the mobile telecommunication system is a 5G mobile network comprising a 5G NR access network. The present example embodiment is applicable to NR in unlicensed spectrum (NR-U). The present disclosure can be applied to other mobile networks, in particular to mobile network of any further generation cellular network technology (6G, etc.).

The above is only a specific implementation manner of the present disclosure, the protection scope of the present disclosure is not limited thereto, and changes or substitutions that can easily be thought of by those skilled in the art within the technical scope disclosed in the present disclosure should be covered by the protection scope of the present disclosure. Therefore, the protection scope of the present disclosure should be subject to the protection scope of the claims.

The various embodiments/examples, aspects and features, if any, described in this specification that do not fall under the scope of the independent claims are to be interpreted as examples useful for understanding various embodiments of the disclosure.
network comprising a 5G NR access network. The present example embodiment is applicable to NR in unlicensed spectrum (NR-U). The present disclosure can be applied to other mobile networks, in particular to mobile network of any further generation cellular network technology (6G, etc.).

The various embodiments/examples, aspects and features, if any, described in this specification that do not fall under the scope of the independent claims are to be interpreted as examples useful for understanding various embodiments of the disclosure.

## Claims

1. A method of transmitting a physical uplink control channel, PUCCH, in unlicensed spectrum, which is transmitted by a user equipment, the method comprising:
generating a PUCCH format 0 in an interlaced structure, based on a base sequence, BSEQ, an acknowledgement information, A/N, and a cyclic shift group, CSG, containing a number of cyclic shift members, CSM, corresponding to the resource block number within the interlaced structure;
determining the cyclic shift group, CSG, containing a first cyclic shift member, CSMf, and a plurality of subsequent cyclic shift members, CSMn, each cyclic shift member, CSM, being defined by a value and a position, by:
configuring the first cyclic shift member, CSMf, with a first indication related to a CSMf value and a second indication related to a CSMf position;
deriving the plurality of subsequent cyclic shift members, CSMn, based on the CSMf value and on a relative position between CSMf and each CSMn so as to define all CSM which are mutually different;
defining a one-to-one mapping relationship between the CSG and an acknowledgement information, A/N;
transmitting the generated PUCCH format 0;wherein the first indication is either a direct indication of the CSMf value from a set of CSM candidates or an indirect indication by a first offset with respect to a reference value of the CSMf in a set of ordered CSM candidates;
wherein the subsequent CSMn are derived using a third function including at least one parameter T determined by a third indication;
wherein the plurality of subsequent CSMn is derived in a way such that CSMn and the CSMf have the following relationship: ${m}_{cs}^{j} = \left({m}_{cs}^{i}+\left(\left(j-i\right)mod {N}_{RB}^{interlace}\right)T\right) mod 12 ,$
wherein ${N}_{RB}^{interlace}$ stands for a total number of Physical Resource Block, PRB, within 1 interlace; ${m}_{cs}^{i}$ represents a CSM on i-th position within the CSG, and is the CSMf value; ${m}_{cs}^{j}$ represents a CSM on *j*-th position within the CSG.

2. The method of transmitting a physical uplink control channel, PUCCH, according to claim 1, wherein the PUCCH format 0 generation comprises the acknowledgement information, A/N, together with a scheduling request, SR, indication and the one-to-one mapping relationship definition is done between the CSG and the A/N information together with the SR indication.

3. The method of transmitting a physical uplink control channel, PUCCH, according to claim 1 or 2, wherein a default CSMf position is set in the absence of the second indication.

4. The method of transmitting a physical uplink control channel, PUCCH, according to any of claims 1 to 3, wherein the third indication is either a direct indication of a parameter value from a set of parameter value candidates or a default value in the absence of the third indication.

5. A user equipment transmitting a physical uplink control channel to a base station in a wireless communication system in unlicensed spectrum, the user equipment comprising:
a processor configured to:
generate a PUCCH format 0 in an interlaced structure, based on a base sequence, BSEQ, an acknowledgement information, A/N, and a cyclic shift group, CSG, containing a number of cyclic shift members, CSM, corresponding to the resource block number within the interlaced structure;
determine the cyclic shift group, CSG, containing a first cyclic shift member, CSMf, and a plurality of subsequent cyclic shift members, CSMn, each cyclic shift member, CSM being defined by a value and a position, by:
configuring the first cyclic shift member, CSMf, with a first indication related to aCSMf value and a second indication related to a CSMf position;
deriving the plurality of subsequent cyclic shift members, CSMn, based on the CSMf value and on a relative position between CSMf and each CSMn so as to define all CSM which are mutually different;
define a one-to-one mapping relationship between the CSG and an acknowledgement information, A/N;
and
a transmitter to transmit the generated PUCCH format 0;
wherein the first indication is either a direct indication of the CSMf value from a set of CSM candidates or an indirect indication by a first offset with respect to a reference value of the CSMf in a set of ordered CSM candidates;
wherein the subsequent CSMn are derived using a third function including at least one parameter T determined by a third indication;
wherein the plurality of CSMn is derived in a way such that CSMn and the CSMf have the following relationship: ${m}_{cs}^{j} = \left({m}_{cs}^{i}+\left(\left(j-i\right)mod {N}_{RB}^{interlace}\right)T\right) mod 12 .$ wherein ${N}_{RB}^{interlace}$ stands for a total number of Physical Resource Block, PRB, within 1 interlace; ${m}_{cs}^{i}$ represents a CSM on i-th position within the CSG, and is the CSMf value; ${m}_{cs}^{j}$ represents a CSM on *j*-th position within the CSG.

6. The user equipment according to claim 5, wherein the processor is configured to
generate the PUCCH format 0 comprising the acknowledgement information, A/N, together with a scheduling request, SR, indication; and
define the one-to-one mapping relationship between the CSG and the A/N information together with the SR indication.

7. The user equipment according to claim 5 or 6, wherein, in case of the indirect indication, the reference value of the CSMf is either pre-defined or configured via a radio resource control, RRC, or derived by a first function.

8. The user equipment according to any of claims 5 to 7, wherein the processor is configured to set a default CSMf value in the absence of the first indication.

9. The user equipment according to any of claims 5 to 8, wherein the processor is configured to set a default CSMf position in the absence of the second indication.

10. The user equipment according to any of claims 5 to 9, wherein the third indication is either a direct indication of a parameter value from a set of parameter value candidates or a default value in the absence of the third indication.

11. A computer readable medium comprising program instructions, which when executed by a user equipment, cause the user equipment to perform the steps of the transmitting method according to any of claims 1 to 4.

## Patentansprüche

1. Verfahren zum Übertragen eines physikalischen Uplink-Steuerkanals, PUCCH, in einem unlizenzierten Spektrum, der durch eine Benutzereinrichtung übertragen wird, wobei das Verfahren Folgendes umfasst:
Erzeugen eines PUCCH-Formats 0 in einer verschachtelten Struktur basierend auf einer Basissequenz, BSEQ, einer Bestätigungsinformation, A/N, und einer zyklischen Verschiebungsgruppe, CSG, die eine Anzahl von zyklischen Verschiebungselementen, CSM, enthält, die der Ressourcenblockanzahl innerhalb der verschachtelten Struktur entspricht;
Bestimmen der zyklischen Verschiebungsgruppe, CSG, die ein erstes zyklisches Verschiebungselement, CSMf, und mehrere nachfolgende zyklische Verschiebungselemente, CSMn, enthält, wobei jedes zyklische Verschiebungselement, CSM, durch einen Wert und eine Position definiert ist, durch:
Konfigurieren des ersten zyklischen Verschiebungselements, CSMf, mit einer ersten Angabe, die sich auf einen CSMf-Wert bezieht, und einer zweiten Angabe, die sich auf eine CSMf-Position bezieht;
Ableiten der mehreren nachfolgenden zyklischen Verschiebungselemente, CSMn, basierend auf dem CSMf-Wert und auf einer relativen Position zwischen dem CSMf und jedem CSMn, um alle CSM zu definieren, die voneinander unterschiedlich sind;
Definieren einer Eins-zu-Eins-Zuordnungsbeziehung zwischen der CSG und einer Bestätigungsinformation, A/N;
Übertragen des erzeugten PUCCH-Formats 0; wobei die erste Angabe entweder eine direkte Angabe des CSMf-Werts aus einem Satz von CSM-Kandidaten oder eine indirekte Angabe durch einen ersten Versatz in Bezug auf einen Referenzwert des CSMf in einem Satz von geordneten CSM-Kandidaten ist;
wobei die nachfolgenden CSMn unter Verwendung einer dritten Funktion abgeleitet werden, die mindestens einen Parameter T beinhaltet, der durch eine dritte Angabe bestimmt wird;
wobei die mehreren nachfolgenden CSMn derart abgeleitet werden, dass die CSMn und das CSMf die folgende Beziehung aufweisen: ${m}_{cs}^{j} = \left({m}_{cs}^{i}+\left(\left(j-i\right)mod {N}_{RB}^{Verschachtelung}\right)T\right) mod 12 ,$
wobei ${N}_{RB}^{Verschachtelung}$ für eine Gesamtanzahl eines physikalischen Ressourcenblocks, PRB, innerhalb von 1 Verschachtelung steht; ${m}_{cs}^{i}$ ein CSM an einer i-ten Position innerhalb der CSG darstellt und der CSMf-Wert ist; ${m}_{cs}^{j}$ ein CSM an einer j-ten Position innerhalb der CSG darstellt.

2. Verfahren zum Übertragen eines physikalischen Uplink-Steuerkanals, PUCCH, nach Anspruch 1, wobei die Erzeugung des PUCCH-Formats 0 die Bestätigungsinformation, A/N, zusammen mit einer Planungsanforderungs-, SR-, Angabe umfasst und die Definition der Eins-zu-Eins-Zuordnungsbeziehung zwischen der CSG und der A/N-Information zusammen mit der SR-Angabe erfolgt.

3. Verfahren zum Übertragen eines physikalischen Uplink-Steuerkanals, PUCCH, nach Anspruch 1 oder 2, wobei bei Fehlen der zweiten Angabe eine Standard-CSMf-Position eingestellt wird.

4. Verfahren zum Übertragen eines physikalischen Uplink-Steuerkanals, PUCCH, nach einem der Ansprüche 1 bis 3, wobei die dritte Angabe entweder eine direkte Angabe eines Parameterwerts aus einem Satz von Parameterwertkandidaten oder bei Fehlen der dritten Angabe ein Standardwert ist.

5. Benutzereinrichtung, die einen physikalischen Uplink-Steuerkanal an eine Basisstation in einem Drahtloskommunikationssystem in einem unlizenzierten Spektrum überträgt, wobei die Benutzereinrichtung Folgendes umfasst:
einen Prozessor, der zu Folgendem konfiguriert ist:
Erzeugen eines PUCCH-Formats 0 in einer verschachtelten Struktur basierend auf einer Basissequenz, BSEQ, einer Bestätigungsinformation, A/N, und einer zyklischen Verschiebungsgruppe, CSG, die eine Anzahl von zyklischen Verschiebungselementen, CSM, enthält, die der Ressourcenblockanzahl innerhalb der verschachtelten Struktur entspricht;
Bestimmen der zyklischen Verschiebungsgruppe, CSG, die ein erstes zyklisches Verschiebungselement, CSMf, und mehrere nachfolgende zyklische Verschiebungselemente, CSMn, enthält, wobei jedes zyklische Verschiebungselement, CSM, durch einen Wert und eine Position definiert ist, durch:
Konfigurieren des ersten zyklischen Verschiebungselements, CSMf, mit einer ersten Angabe, die sich auf einen CSMf-Wert bezieht, und einer zweiten Angabe, die sich auf eine CSMf-Position bezieht;
Ableiten der mehreren nachfolgenden zyklischen Verschiebungselemente, CSMn, basierend auf dem CSMf-Wert und auf einer relativen Position zwischen dem CSMf und jedem CSMn, um alle CSM zu definieren, die voneinander unterschiedlich sind;
Definieren einer Eins-zu-Eins-Zuordnungsbeziehung zwischen der CSG und einer Bestätigungsinformation, A/N; und
einen Übertrager zum Übertragen des erzeugten PUCCH-Formats 0;
wobei die erste Angabe entweder eine direkte Angabe des CSMf-Werts aus einem Satz von CSM-Kandidaten oder eine indirekte Angabe durch einen ersten Versatz in Bezug auf einen Referenzwert des CSMf in einem Satz von geordneten CSM-Kandidaten ist;
wobei die nachfolgenden CSMn unter Verwendung einer dritten Funktion abgeleitet werden, die mindestens einen Parameter T beinhaltet, der durch eine dritte Angabe bestimmt wird;
wobei die mehreren CSMn derart abgeleitet werden, dass die CSMn und das CSMf die folgende Beziehung aufweisen: ${m}_{cs}^{j} = \left({m}_{cs}^{i}+\left(\left(j-i\right)mod {N}_{RB}^{Verschachtelung}\right)T\right) mod 12 .$
wobei ${N}_{RB}^{Verschachtelung}$ für eine Gesamtanzahl eines physikalischen Ressourcenblocks, PRB, innerhalb von 1 Verschachtelung steht; ${m}_{cs}^{i}$ ein CSM an einer i-ten Position innerhalb der CSG darstellt und der CSMf-Wert ist; ${m}_{cs}^{j}$ ein CSM an einer j-ten Position innerhalb der CSG darstellt.

6. Benutzereinrichtung nach Anspruch 5, wobei der Prozessor zu Folgendem konfiguriert ist
Erzeugen des PUCCH-Formats 0, das die Bestätigungsinformation, A/N, zusammen mit einer Planungsanforderungs-, SR-, Angabe umfasst; und
Definieren der Eins-zu-Eins-Zuordnungsbeziehung zwischen der CSG und der A/N-Information zusammen mit der SR-Angabe.

7. Benutzereinrichtung nach Anspruch 5 oder 6, wobei im Fall der indirekten Angabe der Referenzwert des CSMf entweder vordefiniert oder über eine Funkressourcensteuerung, RRC, konfiguriert oder durch eine erste Funktion abgeleitet wird.

8. Benutzereinrichtung nach einem der Ansprüche 5 bis 7, wobei der Prozessor dazu konfiguriert ist, bei Fehlen der ersten Angabe einen Standard-CSMf-Wert einzustellen.

9. Benutzereinrichtung nach einem der Ansprüche 5 bis 8, wobei der Prozessor dazu konfiguriert ist, bei Fehlen der zweiten Angabe eine Standard-CSMf-Position einzustellen.

10. Benutzereinrichtung nach einem der Ansprüche 5 bis 9, wobei die dritte Angabe entweder eine direkte Angabe eines Parameterwerts aus einem Satz von Parameterwertkandidaten oder bei Fehlen der dritten Angabe ein Standardwert ist.

11. Computerlesbares Medium, das Programmanweisungen umfasst, die, wenn sie durch eine Benutzereinrichtung ausgeführt werden, die Benutzereinrichtung veranlassen, die Schritte des Übertragungsverfahrens nach einem der Ansprüche 1 bis 4 durchzuführen.

## Revendications

1. Procédé de transmission d'un canal de commande de liaison physique montante, PUCCH, dans un spectre sans licence, qui est transmis par un équipement utilisateur, le procédé comprenant :
la génération d'un PUCCH format 0 dans une structure entrelacée, sur la base d'une séquence de base, BSEQ, d'informations d'accusé de réception, A/N, et d'un groupe de décalage cyclique, CSG, contenant un certain nombre d'éléments de décalage cyclique, CSM, correspondant au nombre de blocs de ressources à l'intérieur de la structure entrelacée ;
la détermination du groupe de décalage cyclique, CSG, contenant un premier élément de décalage cyclique, CSMf, et une pluralité d'éléments de décalage cyclique suivants, CSMn, chaque élément de décalage cyclique, CSM, étant défini par une valeur et une position, par :
la configuration du premier élément de décalage cyclique, CSMf, avec une première indication relative à une valeur CSMf et une deuxième indication relative à une position CSMf ;
la dérivation de la pluralité d'éléments de décalage cyclique suivants, CSMn, sur la base de la valeur CSMf et d'une position relative entre CSMf et chaque CSMn de sorte à définir tous les CSM qui sont différents entre eux ;
la définition d'une relation de mappage un à un entre le CSG et des informations d'accusé de réception, A/N ;
la transmission du PUCCH format 0 généré ; la première indication étant soit une indication directe de la valeur CSMf provenant d'un ensemble de candidats CSM, soit une indication indirecte par un premier décalage par rapport à une valeur de référence du CSMf dans un ensemble de candidats CSM ordonnés ;
le CSMn suivant étant dérivé au moyen d'une troisième fonction incluant au moins un paramètre T déterminé par une troisième indication ;
la pluralité de CSMn suivants étant dérivée d'une manière telle que CSMn et le CSMf ont la relation suivante : ${m}_{cs}^{j} = \left({m}_{cs}^{i}+\left(\left(j-i\right)mod {N}_{RB}^{interlace}\right)T\right) mod 12 ,$
${N}_{RB}^{interlace}$ représentant un nombre total de blocs de ressources physiques, PRB, à 1 entrelacement ; ${m}_{cs}^{i}$ représentant un CSM sur la i-ième position dans le CSG, et étant la valeur CSMf ; ${m}_{cs}^{j}$ représentant un CSM sur la j-ième position dans le CSG.

2. Procédé de transmission d'un canal de commande physique de liaison montante, PUCCH, selon la revendication 1, la génération du PUCCH format 0 comprenant les informations d'accusé de réception, A/N, conjointement avec une indication de demande de planification, SR, et la définition de relation de mappage un à un étant effectuée entre le CSG et les informations A/N conjointement avec l'indication SR.

3. Procédé de transmission d'un canal de commande de liaison physique montante, PUCCH, selon la revendication 1 ou 2, une position CSMf par défaut étant établie en l'absence de la deuxième indication.

4. Procédé de transmission d'un canal de commande de liaison physique montante, PUCCH, selon l'une quelconque des revendications 1 à 3, la troisième indication étant soit une indication directe d'une valeur de paramètre provenant d'un ensemble de candidats de valeur de paramètre, soit une valeur par défaut en l'absence de la troisième indication.

5. Équipement utilisateur transmettant un canal de commande de liaison physique montante à une station de base dans un système de communication sans fil dans un spectre sans licence, l'équipement utilisateur comprenant :
un processeur configuré pour :
générer un PUCCH format 0 dans une structure entrelacée, sur la base d'une séquence de base, BSEQ, d'informations d'accusé de réception, A/N, et d'un groupe de décalage cyclique, CSG, contenant un certain nombre d'éléments de décalage cyclique, CSM, correspondant au nombre de blocs de ressources à l'intérieur de la structure entrelacée ;
déterminer le groupe de décalage cyclique, CSG, contenant un premier élément de décalage cyclique, CSMf, et une pluralité d'éléments de décalage cyclique suivants, CSMn, chaque élément de décalage cyclique, CSM, étant défini par une valeur et une position, par :
la configuration du premier élément de décalage cyclique, CSMf, avec une première indication relative à une valeur CSMf et une deuxième indication relative à une position CSMf ;
la dérivation de la pluralité d'éléments de décalage cyclique suivants, CSMn, sur la base de la valeur CSMf et d'une position relative entre CSMf et chaque CSMn de sorte à définir tous les CSM qui sont différents entre eux ;
définir une relation de mappage un à un entre le CSG et des informations d'accusé de réception, A/N ;
et
un émetteur pour transmettre le PUCCH format 0 généré ;
la première indication étant soit une indication directe de la valeur CSMf provenant d'un ensemble de candidats CSM, soit une indication indirecte par un premier décalage par rapport à une valeur de référence du CSMf dans un ensemble de candidats CSM ordonnés ;
le CSMn suivant étant dérivé au moyen d'une troisième fonction incluant au moins un paramètre T déterminé par une troisième indication ;
la pluralité de CSMn étant dérivée d'une manière telle que CSMn et le CSMf ont la relation suivante : ${m}_{cs}^{j} = \left({m}_{cs}^{i}+\left(\left(j-i\right)mod {N}_{RB}^{interlace}\right)T\right) mod 12 .$
${N}_{RB}^{interlace}$ représentant un nombre total de blocs de ressources physiques, PRB, à 1 entrelacement ; ${m}_{cs}^{i}$ représentant un CSM sur la i-ième position dans le CSG, et étant la valeur CSMf ; ${m}_{cs}^{j}$ représentant un CSM sur la j-ième position dans le CSG.

6. Équipement utilisateur selon la revendication 5, le processeur étant configuré pour :
générer le PUCCH format 0 comprenant les informations d'accusé de réception, A/N, conjointement à une indication de demande d'ordonnancement, SR ; et
définir la relation de mappage un à un entre le CSG et les informations A/N conjointement à l'indication SR.

7. Équipement utilisateur selon la revendication 5 ou 6, dans le cas de l'indication indirecte, la valeur de référence du CSMf étant soit prédéfinie, soit configurée par l'intermédiaire d'une commande de ressources radio, RRC, soit dérivée par une première fonction.

8. Équipement utilisateur selon l'une quelconque des revendications 5 à 7, le processeur étant configuré pour établir une valeur CSMf par défaut en l'absence de la première indication.

9. Équipement utilisateur selon l'une quelconque des revendications 5 à 8, le processeur étant configuré pour établir une position CSMf par défaut en l'absence de la deuxième indication.

10. Équipement utilisateur selon l'une quelconque des revendications 5 à 9, la troisième indication étant soit une indication directe d'une valeur de paramètre provenant d'un ensemble de candidats de valeur de paramètre, soit une valeur par défaut en l'absence de la troisième indication.

11. Support lisible par ordinateur comprenant des instructions de programme qui, lorsqu'elles sont exécutées par un équipement utilisateur, amènent l'équipement utilisateur à exécuter les étapes du procédé de transmission selon l'une quelconque des revendications 1 à 4.
